# EUROPEAN PATENT APPLICATION

(11) **EP 2 264 985 A1**
(43) Date of publication of application: **22.12.2010**
(21) Application number: 09730438.0
(22) Date of filing: 06.04.2009
(51) Int. Cl.: H04M 1/02, G02B 6/00, G02B 6/122

(54) **ELECTRONIC DEVICE**

(30) Priority: 07.04.2008 JP 2008099400
(71) Applicant: Hitachi Chemical Company, Ltd., Tokyo 163-0449 (JP)
(72) Inventor: KURODA, Toshihiro, Tsukuba-shi Ibaraki 300-4247 (JP); SHIBATA, Tomoaki, Tsukuba-shi Ibaraki 300-4247 (JP); MASUDA, Hiroshi, Tsukuba-shi Ibaraki 300-4247 (JP)
(74) Representative: HOFFMANN EITLE
(86) International application number: PCT/JP2009/057049
(87) International publication number: WO 2009/125735

(57) **Abstract**

The present invention relates to an electronic device constituted from a first case having a first light receiving and emitting part and a second case having a second light receiving and emitting part and having a mechanism in which the first case slides relatively to the second case, wherein an optical waveguide as an optical communication means for connecting the first light receiving and emitting part with the second light receiving and emitting part by optical signals is provided, and the above optical waveguide is arranged in a space part between the first case and the second case so that a width direction of the optical waveguide is a vertical direction.

Capable of being provided is an electronic device having a structure in which two cases are changed in a relative position by a sliding structure and connecting the above two cases via an optical waveguide, wherein breaking and cracks are not brought about on the optical waveguide by sliding.

## Description

### BACKGROUND OF THE INVENTION

The present invention relates to an electronic device, specifically to an electronic device having a mechanism which comprises plural cases and in which they slide in a relative manner, such as portable phones, PDA (personal digital assistance) and the like.

### RELATED ART

In small-sized electronic devices such as portable phones and the like, further reduction in sizes thereof are requested, and devices having a case structure of a folding system and a sliding system are put into practical products. In a case of, for example, portable phones, they are constituted from a case comprising a receiver which receives voices of an intended person and a case comprising a transmitter for sending voices to the intended person and a key operation part, and they are connected via a hinge or connected by virtue of a sliding structure. The above two cases have a structure in which they change relatively a position thereof, and therefore wirings connecting the above cases have to be flexible. Accordingly, it is proposed to use, for example, plural flexible printed circuit board members which are superposed in a layer form as an electric connection means for electrically connecting the above two cases (refer to a patent document 1).

However, transmission through conventional electric wirings is restricted in a rise in a speed and a density due to barriers brought about by mutual interference and attenuation of signals, and communication means having a higher speed are requested.
A technique in which two cases are connected by an optical waveguide is proposed in order to meet the above request (refer to a patent document 2). A portable device equipped with a liking part for connecting variably two cases at relative positions and an optical waveguide film having at least one optical waveguide for connecting boards provided on two cases by optical wirings is proposed in the patent document 2 (refer to claim 1 of the patent document 2). Further, proposed is a portable device in which a liking part has a hinge, in which two cases are connected foldably and in which an optical waveguide film is arranged obliquely against a rotary axis of the hinge (refer to claim 3 of the patent document 2).
It is stated that according to the patent document 2, optical signals can be transmitted without loss even at a bending radius of about 5 mm (refer to a paragraph 0018 of the patent document 2). Further, it is stated that when the optical waveguide film is arranged obliquely, a good result was shown even at a bending radius of 1.5 mm (refer to a paragraph 0053 of the patent document 2).

Patent document 1: Japanese Patent Application Laid-Open No. 222173/2004
Patent document 2: Japanese Patent Application Laid-Open No. 42307/2006

### DISCLOSURE OF THE INVENTION

The technique disclosed in the patent document 2 is considered to be effective for portable phones having a hinge part and a folding structure. However, when two cases are changed in a relative position by a sliding structure, the conditions become severer, and therefore it is questionable whether or not the same effects as in a case of the hinge structure are always shown. A portable phone having a sliding structure is at least disclosed in the patent document 2 (refer to a paragraph 0131 and Fig. 29 of the patent document 2). However, it is not specifically disclosed how the optical waveguide film is used in the above structure, and an effect thereof is not specifically disclosed as well. That is, the problem that when a relative position of two cases is actually changed by sliding, a stress is applied on an optical waveguide part to result in bringing about breaking and cracks has not come to be solved.
An object of the present invention is to provide an electronic device having a structure in which two cases are changed in a relative position by a sliding structure and connecting the above two cases through an optical waveguide, wherein breaking and cracks are not produced on the optical waveguide by sliding.

Intense investigations repeated by the present inventors have resulted in finding that breaking and cracks are prevented from being produced on a part of an optical waveguide even if assuming a sliding structure by arranging the optical waveguide used as an optical wiring so that a width direction thereof is a vertical direction. The present invention has been completed based on the above knowledge.
That is, the present invention provides an electronic device constituted from a first case having a first light receiving and emitting part and a second case having a second light receiving and emitting part and having a mechanism in which the first case slides relatively to the second case, wherein an optical waveguide as an optical communication means for connecting the first light receiving and emitting part with the second light receiving and emitting part by optical signals is provided, and the above optical waveguide is arranged in a space part between the first case and the second case so that a width direction of the optical waveguide is a vertical direction.

The electronic device of the present invention does not bring about breaking and cracks on an optical waveguide even after repeating sliding over a long period of time and can maintain a good communication function.

### Brief Explanation of the Drawing

Fig. 1 is a perspective drawing showing a constitution of the portable phone (the electronic device of the present invention).
Fig. 2 is a schematic drawing showing the form of the optical waveguide in the present invention.
Fig. 3 is a schematic drawing showing the optical waveguide (mono-core) used in the present invention.
Fig. 4 is a schematic drawing showing the optical waveguide (di-core) used in the present invention.
Fig. 5 is a schematic drawing showing the optical waveguide (tetra-core) used in the present invention.
Fig. 6 is a schematic drawing showing a case in which the optical waveguide (di-core) used in the present invention is arranged by a conventional method.
Fig. 7 is a schematic drawing showing a case in which the optical waveguide (di-core) used in the present invention is arranged by the method of the present invention.
Fig. 8 is a schematic drawing showing a laminated optical waveguide (tetra-core) which can be used in the present invention.

### EXPLANATION of CODES

1. Portable phone (the electronic device of the present invention)
10. First case
20. Second case
30. Optical waveguide

### BEST MODE FOR CARRYING OUT THE INVENTION

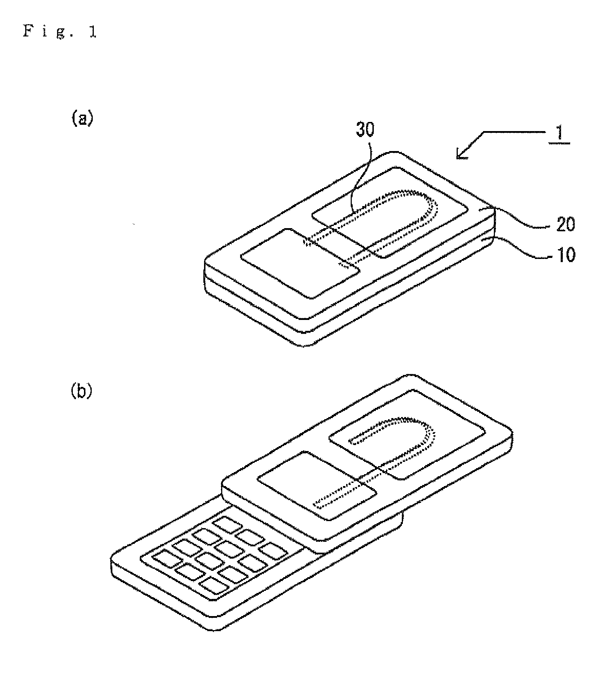

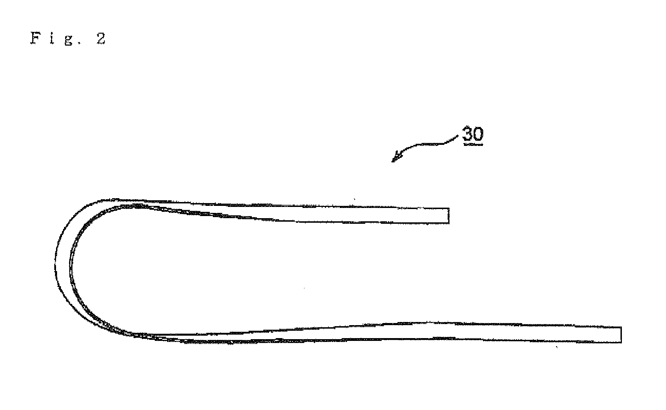

The electronic device of the present invention is constituted from a first case having a first light receiving and emitting part and a second case having a second light receiving and emitting part and having a mechanism in which the first case slides relatively to the second case, wherein an optical waveguide as an optical communication means for connecting the first light receiving and emitting part with the second light receiving and emitting part by optical signals is provided, and the above optical waveguide is arranged in a space part between the first case and the second case so that a width direction of the optical waveguide stands in a vertical direction.
An example of a portable phone which is one of the electronic devices shall be explained below in detail with reference to Fig. 1 and Fig. 2.

Fig. 1 is a perspective drawing showing a constitution of a portable phone which is one of the electronic devices of the present invention. The electronic device (portable phone) 1 in the present invention comprises a first case 10 having a first light receiving and emitting part and a second case 20 having a second light receiving and emitting part, and the first light receiving and emitting part is connected with the second light receiving and emitting part (not illustrated) by an optical waveguide 30 which is an optical communication means.
The first case and the second case have a first electric circuit part and a second electric circuit part respectively, and the above first electric circuit part is connected with the above second electric circuit part by an electric connecting means. The electric connecting means is provided in order to supply an electricity or transmit and receive electric signals such as parallel signals for lighting LED, and a form thereof does not matter. For example, a flexible printed circuit board can suitably used therefor.
The optical waveguide and the electric connecting means such as a flexible printed circuit board may be present separately and independently or may be integrated. In the present invention, a photoelectric mixed load board in which an optical waveguide and a flexible printed circuit board are integrated is a preferred embodiment.

A radio transmission circuit part, an antenna connected with the above radio transmission circuit part and character input keys for inputting textual informations and the like are usually arranged in the first case 10, and they are connected with the first light receiving and emitting part. Also, a cell part as a power source is provided and connect with a first circuit board part.
A receiver for receiving voices, a microphone for transmitting voices and a display part for displaying characters and images are usually arranged in the second case 20, and they are connected with the second light receiving and emitting part.

The electronic device of the present invention is characterized by having a mechanism in which the first case slides relatively to the second case. To be more specific, the first case slides from a state shown in Fig. 1 (a) to a state shown in Fig. 1 (b).

Fig. 2 is a drawing showing the optical waveguide 30 in observing the electronic device shown in Fig. 1 from an upper side. The optical waveguide 30 for connecting the first light receiving and emitting part with the second light receiving and emitting part is arranged in a twisted state as shown in Fig. 2 in a space part between the first case and the second case so that a width direction of the optical waveguide stands in a vertical direction. In the example shown in Fig. 2, an upper cladding side of the optical waveguide is in an outside of the bent surface, and a lower cladding side thereof is in an inside of the bent surface. The above arrangement makes it possible to enlarge a bending radius R based on the optical waveguide, and therefore a stress is not applied on the optical waveguide when the first case slides, so that breaking and cracks are not brought about.

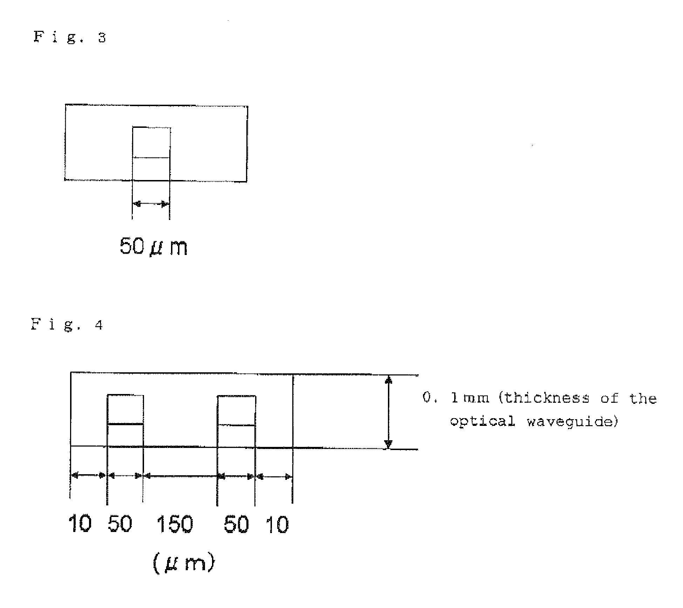

Next, relation of the bending radius R with an optical loss shall be explained below. First, the optical waveguide includes a mono-core type having one core, a di-core type having two cores and a tetra-core type having four cores according to the number of cores, and the optical waveguide having two or more cores is usually used because of two-way communication. The more the number of the core is, and the larger the size of the core is, the more the information content is increased. On the other hand, as the core is increased in a number and a size, the optical waveguide itself grows larger, and therefore the core is limited in a number and a size in small-sized electronic devices.
Schematic drawings in the cases of one core, two cores and four cores are shown in Fig. 3 to Fig. 5. In this regard, an example of the core having a size of 50 µm shall be explained.

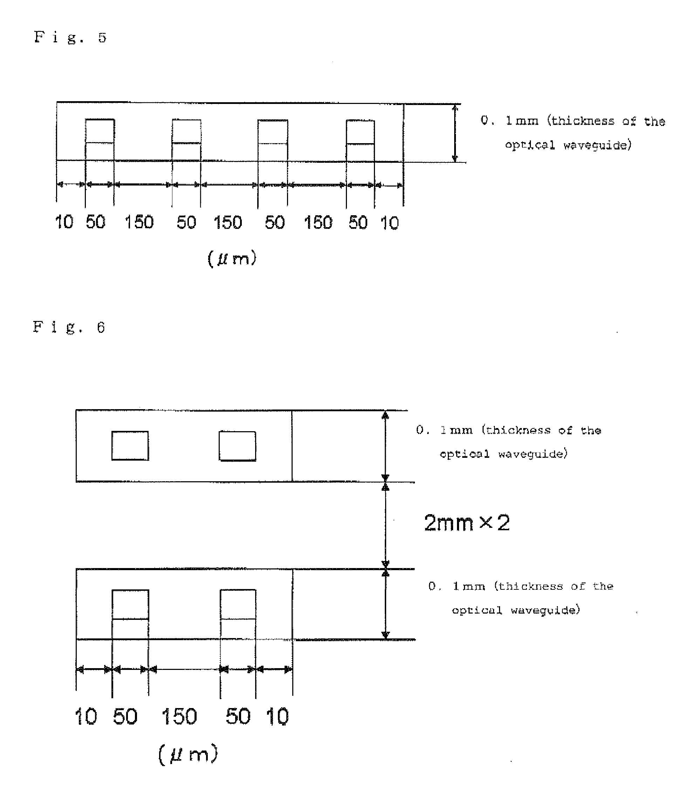

The optical waveguide having one core is shown in Fig. 3, wherein a refractive index ratio (core/clad) of the core to the clad is 1.022; a size of the core is 50 µm square; and a thickness of the optical waveguide is 100 µm.
Also, the optical waveguide having two cores is shown in Fig. 4. If the cores have a size of 50 µm square, it is considered that a cladding layer having a length of three times thereof as a distance between cores has to be present between them in order to inhibit the cores from interfering with each other. Also, as far as an end thereof is concerned, a cladding layer of such an extent that light does not leak is satisfactory, and therefore a size thereof is about 10 µm. Accordingly, a width of the optical waveguide is, as shown in Fig. 4, about 270 µm, and a thickness thereof is about 100 µm (0.1 mm).
Next, the optical waveguide having four cores is shown in Fig. 5. In respect to a distance between the cores, a cladding layer having a length of three times as large as a width of the core is required as is the case with described above. Accordingly, a width of the optical waveguide is about 670 µm in total, and a thickness thereof is about 100 µm (0.1 mm).

Next, the optical waveguide (a refractive index ratio of the core to the clad: 1.022; the core: 50 µm square; and a thickness of the optical waveguide: 100 µm) having one core shown in Fig. 3 was prepared to measure a bending radius and an optical loss change thereof, and the results thereof are shown in Table 1. As shown in Table 1, when the bending radius is 1.5 mm or less, the optical loss exceeds 0.5 dB and reaches a level in which practical application thereof is difficult. Accordingly, if the bending radius is set to 2 mm to arrange an optical waveguide by a conventional method, a thickness thereof is, as shown in Fig. 6, 4.2 mm in total, and it can not meet needs of small-sized electronic devices such as portable phones and the like to which a reduction in a size is requested.

**Table 1**

| | | | | | | |
|---|---|---|---|---|---|---|
| Bending radium (mm) | 1 | 1.5 | 2 | 2.5 | 3 | 4 |
| Optical loss (dB) | 1.2 | 0.7 | 0.4 | 0.1 | 0.1 | 0.005 |

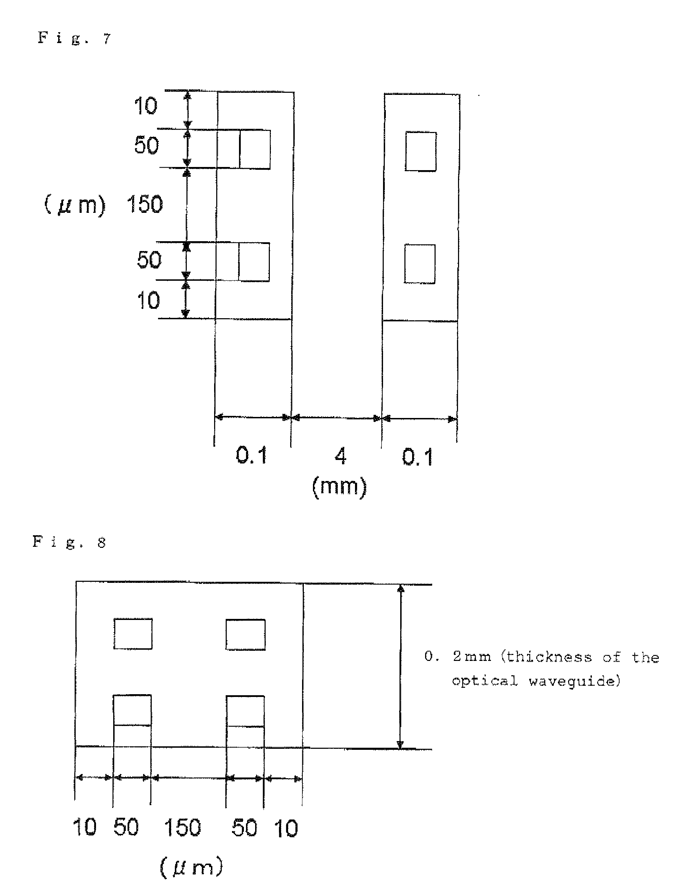

On the other hand, if the optical waveguide is arranged, as shown in Fig. 7, according to the present invention, that is, arranged so that a width direction of the optical waveguide stands in a vertical direction, a width of the optical waveguide is about 270 µm which is 1 mm or less, and it is a sufficiently small value to a thickness direction of the optical waveguide. Accordingly, the optical waveguide can be arranged in a space part between the first case and the second case which constitute the portable phone. Further, a wide space is present in a width direction of the portable phone, and therefore the bending radius R to the optical waveguide can be enlarged, so that a stress is not exerted on the optical waveguide to prevent breaking and cracks from being brought about.
Also in the four cores shown in Fig. 5, a width of the optical waveguide is about 670 µm, and therefore the optical waveguide can be arranged, as is the case with the two cores, in a space part between the first case and the second case which constitute the portable phone, so that the bending radius R to the optical waveguide can be enlarged.
Further, in a case of, for example, 12 cores, a width formed by the core layers is 50 µm × 12; a width of the cladding layers between the cores is 50 µm × 3 times × 11; and a width of the cladding layers at both ends is 10 µm × 2. Thus, a width thereof is 2270 µm (2.27 mm) in total. Also in the above case, the optical waveguide can satisfactorily be arranged in a space part between the first case and the second case by changing a relative position of the first light receiving and emitting part and the second light receiving and emitting part, and communication of further larger capacity can be carried out.
Further, an optical wave guide of a laminate type (two layer are laminated in Fig. 8) in which plural sets of a lower cladding layer, a core and an upper cladding layer are superposed as shown in Fig. 8 can be used as well, and communication of further larger capacity can be carried out.

An electric mixed load board to which an optical waveguide and a flexible electric wiring board are conjugated is included in the optical waveguide 30 explained above.
An optical waveguide film equipped with a core and a clad and the flexible electric wiring board are conjugated to the photoelectric mixed load board, and conjugation is carried out preferably on the whole surface.
The optical waveguide film and the flexible electric wiring board which are used in the present invention shall be explained below.

### [Optical waveguide film]

The optical waveguide film used in the present invention is equipped with a core and a clad, and products which have so far been used as an optical waveguide film can be used. For example, a resin film for forming an optical waveguide comprising a resin composition containing (A) a base polymer, (B) a photopolymerizable compound and (C) a photopolymerization initiator can be used.

When a cured matter such as a film and the like is formed, the base polymer (A) is used in order to secure a strength thereof and shall not specifically be restricted as long as the above purpose can be achieved, and it includes phenoxy resins, epoxy resins, (meth)acryl resins, polycarbonate resins, polyallylate resins, polyetheramides, polyetherimides, polyethersulfones and the like and derivatives thereof. The above base polymers can be used alone or in a mixture of two or more kinds thereof.

The photopolymerizable compound (B) shall not specifically be restricted as long as it is polymerized by irradiation with light such as a UV ray and the like, and it is preferably a compound having an ethylenically unsaturated group in a molecule from the viewpoint of a reactivity to light. To be specific, it includes (meth)acrylates, vinylidene halides, vinyl ethers, vinylpyridine, vinylphenol and the like, and among them, (meth)acrylates are preferred from the viewpoint of a transparency and a heat resistance. Any of the monofunctional compounds, the difunctional compounds and the trifunctional compounds can be used as the (meth)acrylate.
In this connection, (meth)acrylate means acrylate and methacrylate.

The photopolymerization initiator (C) shall not specifically be restricted and includes, for example, aromatic ketones such as benzophenone, N,N'-tetramethyl-4,4'-diaminobenzophenone (Michler's ketone), N,N'-tetraethyl-4,4'-diaminobenzophenone, 4-methoxy-4'-dimethylaminobenzophenone, 2-benzyl-2-dimethylamino-1-(4-morpholinophenyl)-butane-1-one, 2,2-dimethoxy-1,2-diphenylethane-1-one, 1-hydroxycyclohexyl phenyl ketone, 2-hydroxy-2-methyl-1-phenylpropane-1-one, 1-[4-(2-hydroxyethoxy)phenyl]-2-hydroxy-2-methyl-1-propane-1-one, 1,2-methyl-1- [4-(methylthio)phenyl]-2-morpholinopropane-1-one and the like; quinones such as 2-ethylanthraquinone, phenanthrenequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthraquinone, 2-methyl-1,4-naphthoquinone, 2,3-dimethylanthraquinone and the like; benzoin ether compounds such as benzoin methyl ether, benzoin ethyl ether, benzoin phenyl ether and the like; benzoin compounds such as benzoin, methylbenzoin, ethylbenzoin and the like; benzyl derivatives such as benzyl dimethyl ketal and the like; 2,4,5-triarylimidazole dimers such as 2-(o-chlorophenyl)-4,5-diphenylimidazole dimer, 2-(o-chlorophenyl)-4,5-di(methoxyphenyl)imldazole dimer, 2-(o-fluorophenyl)-4,5-diphenylimidazole dimer, 2-(o-methoxyphenyl)-4,5-diphenylimidazole dimer, 2-(p-methoxyphenyl)-4,5-diphenylimidazole dimer and the like; phosphine oxides such as bis(2,4,6-trimethylbenzoyl)phenylphosphine oxide, bis(2,6-dimethoxybenzoyl)-2,4,4-trimethylpentylphosphine oxide, 2,4,6-trimethylbenzoyldiphenylphosphine oxide and the like; acridine derivatives such as 9-phenylacridine, 1,7-bis(9,9'-acridinyl)heptane and the like; N-phenylglycine, N-phenylglycine derivatives, coumarin base compounds and the like.

A blend amount of the base polymer (A) is preferably 10 to 80 % by mass based on the whole amount of the component (A) and the component (B). If the above blend amount is 10 % by mass or more, even a thick film having a thickness of 50 µm or more can readily be produced when a film is formed. On the other hand, if it is 80 % by mass or less, the optical curing reaction sufficiently goes on. From the viewpoints described above, a blend amount of the base polymer (A) is more preferably 20 to 70 % by mass.

A blend amount of the photopolymerizable compound (B) is preferably 20 to 90 % by mass based on the whole amount of the component (A) and the component (B). If the above blend amount is 20 mass % or more, the base polymer can readily be entwined therein and cured. On the other hand, if it is 90 % by mass or less, a film having a large thickness can readily be formed. From the viewpoints described above, a blend amount of the photopolymerizable compound (B) is more preferably 30 to 80 % by mass.

A blend amount of the photopolymerization initiator (C) is preferably 0.1 to 10 parts by mass based on the whole amount 100 parts by mass of the component (A) and the component (B). If the above blend amount is 0.1 part by mass or more, the optical sensitivity is sufficiently high. On the other hand, if it is 10 % by mass or less, absorption on a surface layer of the light-sensitive resin composition is prevented from growing larger in exposure, and optical curing in the inside goes on sufficiently. Further, the propagation loss is prevented from growing larger by influence of light absorption of the photopolymerization initiator itself, and it is suitable. From the viewpoints described above, a blend amount of the photopolymerization initiator (C) is more preferably 0.2 to 5 parts by mass.

The optical waveguide film used in the present invention can readily be produced by dissolving a resin composition containing the components (A) to (C) in a solvent, coating the solution on the base material and removing the solvent. The solvent used above shall not specifically be restricted as long as it can dissolve the above resin composition, and capable of being used are, for example, solvents such as acetone, methyl ethyl ketone, methyl cellosolve, ethyl cellosolve, toluene, N,N-dimethylformamide, N,N-dimethylacetamide, propylene glycol monomethyl ether and the like and mixed solvents thereof. Usually, a concentration of solid matters contained in the resin solution is preferably 30 to 60 % by mass.

A thickness of the optical waveguide film used in the present invention shall not specifically be restricted, and it is usually 10 to 250 µm in terms of a thickness after dried. If it is 10 µm or more, the advantage that the coupling tolerance with a light-sensitive and light emitting element or an optical fiber can be expanded is obtained. If it is 250 µm or less, the advantage that the coupling efficiency with a light receiving and emitting device or an optical fiber is enhanced is obtained. From the viewpoints described above, a thickness of the above film falls in a range of more preferably 40 to 90 µm.

The base material used in a production process of the resin film for forming an optical waveguide used in the present invention is a support for supporting the film for forming an optical waveguide, and a material thereof shall not specifically be restricted. From the viewpoints of peeling off readily the film for forming an optical waveguide later and having a heat resistance and a solvent resistance, it suitably includes polyesters such as polyethylene terephthalate and the like, polypropylene, polyethylene and the like. A thickness of the above base material falls in a range of preferably 5 to 50 µm. If it is 5 µm or more, the advantage that a strength of the support is liable to be obtained is provided, and if it is 50 µm or less, the advantage that a gap with the mask in forming the patterns is decreased to make it possible to form finer patterns is obtained. From the viewpoints described above, a thickness of the above base material falls in a range of more preferably 10 to 40 µm, particularly preferably 20 to 30 µm.
The film for forming an optical waveguide provided on the base material thus obtained can readily be stored by winding in, for example, a roll form. Further, a protective film can be provided as well, if necessary, on the film for forming an optical waveguide. The base material and the protective film described above may be subjected to antistatic treatment and the like in order to make it easy to peel off the film for forming an optical waveguide later.

A production process for forming an optical waveguide by using the resin film for forming an optical waveguide obtained in the manner described above shall be explained below. The process thereof includes, for example, a process in which a lower cladding film peeled off from a base material is laminated on a substrate after removing the protective layer when the protective layer is present by pressing onto the substrate while heating. In this connection, the lamination is carried out preferably under reduced pressure from the viewpoint of the adhesive property and the following property. A heating temperature of the above resin film is preferably 50 to 130°C, and a pressing pressure thereof is preferably 0.1 to 1.0 MPa (1 to 10 kgf/cm²), but the above conditions shall not specifically be restricted.

A thickness of the lower cladding layer shall not specifically be restricted, and it is preferably 2 to 50 µm. If it is 2 µm or more, it is easy to shut a propagated light in an inside of the core, and if it is 50 µm or less, a whole thickness of the optical waveguide 1 is prevented from being too large. In the present invention, from the viewpoint of satisfying particularly a bending durability at a small bending radius, a thickness of the lower cladding layer falls in a range of more preferably 15 to 35 µm, particularly preferably 20 to 30 µm.
A thickness of the lower cladding layer is a value obtained by measuring from a boundary between the core part and the lower cladding layer to a lower surface of the lower cladding layer.

Next, the lower cladding film is cured by light or heating, and a core film having a higher refractive index than that of the lower cladding film is laminated thereon by the same method. The resin film thus laminated is imagewise irradiated with an actinic ray through a negative or positive mask pattern called an artwork. A light source for an actinic ray includes, for example, publicly known light sources radiating effectively a UV ray, such as a carbon arc lamp, a mercury vapor arc lamp, an ultrahigh pressure mercury lamp, a high pressure mercury lamp, a xenon lamp and the like. In addition to the above lamps, lamps effectively radiating a visible light, such as a photographic flood valve, a sun lamp and the like can be used as well.

A height of the core part 2 shall not specifically be restricted, and it is preferably 10 to 150 µm. If a height of the core part is 10 µm or more, the positioning tolerance is prevented from being decreased in coupling with a light receiving and emitting device or an optical fiber after forming the optical waveguide, and if it is 150 µm or less, the coupling efficiency is prevented from being reduced in coupling with a light receiving and emitting device or an optical fiber after forming the optical waveguide. In the present invention, from the viewpoint of satisfying particularly a bending durability at a small bending radius, a height of the core part falls in a range of more preferably 30 to 90 µm, particularly preferably 40 to 80 µm.

Next, the unexposed part is developed by removing it by wet development, dry development and the like after exposure to produce a core pattern. In a case of the wet development, a developer meeting a composition of the resin film described above, such as an organic solvent, an alkaline aqueous solution, a water base developer and the like is used to carry out the development, for example, by a publicly known method such as spraying, oscillation dipping, brushing, scrapping and the like.
Developers which are safe and stable and have a good operability, such as organic solvents, alkaline aqueous solutions and the like are preferably used as the developer. The organic solvent base developer described above includes, for example, 1,1,1-trichloroethane, N-methylpyrrolidone, N,N-dimethylformamide, N,N-dimethylacetamide, cyclohexanone, methyl isobutyl ketone, γ-butyrolactone and the like. Water may be added to the above organic solvents in a range of 1 to 20 % by mass in order to prevent ignition.

Used as a base of the alkaline aqueous solution described above are, for example, alkali hydroxides such as hydroxides of lithium, sodium and potassium; alkali carbonates such as carbonates or bicarbonates of lithium, sodium, potassium and ammonium; alkali metal phosphates such as potassium phosphate, sodium phosphate and the like; alkali metal pyrophosphates such as sodium pyrophosphate, potassium pyrophosphate and the like. Also, the alkaline aqueous solution used for the development includes preferably, for example, dilute solutions of 0.1 to 5 % by mass of sodium carbonate, dilute solutions of 0.1 to 5 % by mass of potassium carbonate, dilute solutions of 0.1 to 5 % by mass of sodium hydroxide, dilute solutions of 0.1 to 5 % by mass of sodium tetraborate and the like. A pH of the alkaline aqueous solution used for the development falls preferably in a range of 9 to 11, and a temperature thereof is controlled in accordance with a developability of the layer of the photosensitive resin composition. A surfactant, a defoaming agent, a small amount of an organic solvent for accelerating the development and the like may be mixed in the alkaline aqueous solution.

The water base developer described above comprises water or an alkaline aqueous solution and at least one organic solvent. In this regard, the alkaline substances include, in addition to the substances described above, borax, sodium metasilicate, tetramethylammonium hydroxide, ethanolamine, ethylenediamine, diethylenetriamine, 2-amino-2-hydroxymethyl-1,3-propanediol, 1,3-diaminopropanol-2, morpholine and the like. A pH of the developer is preferably as small as possible in a range in which the resist can be developed sufficiently well, and the pH is preferably 8 to 12, more preferably 9 to 10. The organic solvent described above includes, for example, triacetone alcohol, acetone, ethyl acetate, alkoxyethanols having an alkoxy group having 1 to 4 carbon atoms, ethyl alcohol, isopropyl alcohol, butyl alcohol, diethylene glycol monomethyl ether, diethylene glycol monoethyl ether, diethylene glycol monobutyl ether and the like. They are used alone or in combination of two or more kinds thereof. Usually, a concentration of the organic solvent is preferably 2 to 90 % by mass, and a temperature thereof can be controlled in accordance with a developability thereof. Small amounts of a surfactant, a defoaming agent and the like can be mixed as well in the water base developer.

Further, two or more kinds of the developing methods may be used, if necessary, in combination. The developing method includes, for example, a dipping method, a battle method, spray methods such as a high pressure spray method and the like, brushing, scrapping and the like.
The core pattern may further be cured, if necessary, by heating at 60 to 250°C or irradiating at 0.1 to 1000 mJ/cm² as treatment after the development.

Next, an upper cladding film having a lower refractive index than that of the core film is laminated thereon by the same method to prepare an optical waveguide. A thickness of the upper cladding layer shall not specifically be restricted as long as it falls in a range in which the core part can be embedded, and it is preferably 2 to 50 µm in terms of a thickness after drying. From the viewpoint of satisfying the bending durability at a small bending radius, a thickness thereof falls in a range of more preferably 2 to 30 µm, particularly preferably 5 to 25 µm. A thickness of the upper cladding layer may be the same as or different from a thickness of the lower cladding layer formed at the beginning. A thickness of the upper cladding layer shown above is a value measured from a boundary between the core part and the upper cladding layer to an upper face of the upper cladding layer.

### [Flexible electric wiring board]

An FPC (flexible printed circuit) board can suitably be used as the flexible electric wiring board. Polyimide, polyamide, polyetherimide, polyethylene terephthalate, liquid crystal polymers and the like are used as a board material of the FPC board, and polyimide is usually used from the viewpoint of a heat resistance and an availability. A commercially available product thereof includes, for example, an FPC board prepared by using Kapton (manufactured by Du Pont-Toray Co., Ltd.).
In this regard, a thickness of the board constituting the flexible electric wiring board shall not specifically be restricted. As described above, a ratio of a thickness of a reinforcing material to a thickness of the board falls preferably in a range of 4 : 1 to 1 : 4 from the viewpoint of the bending durability, and a thickness of the board is preferably selected so that the above range is satisfied. Further, a thickness of the above board is suitably decided from a thickness required to the photoelectric mixed load board itself, and to be specific, it falls in a range of preferably 5 to 50 µm.

### [Photoelectric mixed load board]

The photoelectric mixed load board is produced by bonding the optical waveguide film and the flexible electric wiring board each described above.
In bonding the optical waveguide film and the flexible electric wiring board, an adhesive can be used if necessary. The kind of the adhesive can suitably be decided according to the materials of the optical waveguide film and the flexible electric wiring board.
The adhesive has preferably a flexibility after cured in order to provide the photoelectric mixed load board with a flexibility, and to be specific, it has an elastic modulus of preferably 700 MPa or less, more preferably 600 MPa or less and particularly preferably 500 MPa or less after cured. The elastic modulus is preferably 1 MPa or more, more preferably 5 MPa or more from the viewpoint of a strength of the adhesive.
In respect to the kind of the adhesive, suitably shown as the examples thereof are acryl rubber base adhesives and as commercially available products, a high heat resistant adhesive insulating material KS7003 (elastic modulus: 700 MPa) manufactured by Hitachi Chemical Co., Ltd., an adhesive Hi-Bon 808 for a flexible printed wiring board (elastic modulus: 50 MPa) manufactured by Hitachi Kasei Polymer Co., Ltd. and the like.

A bonding method of the optical waveguide film and the flexible electric wiring board shall not specifically be restricted, and it is preferably a method carried out by using a roll laminator or a flat plate laminator from the viewpoints of the adhesive property and prevention of introducing air bubbles. A lamination temperature of the roll laminator falls preferably in a range of room temperature (25°C) to 100°C. If it is room temperature (25°C) or higher, the adhesive property to the optical waveguide is enhanced. On the other hand, if it is 100°C or lower, the adhesive layer is prevented from flowing, and the required thickness is obtained. From the viewpoints described above, it falls more preferably in a range of 40 to 100°C. The pressure is preferably 0.2 to 1.0 MPa (1 to 10 kgf/cm²), and the lamination speed is preferably 0.1 to 3 m/minute. However, the above conditions shall not specifically be restricted.
The flat plate laminator shows a laminator in which lamination materials are interposed between a pair of flat plates and pressed by applying pressure to the flat plates, and a vacuum pressure laminator can suitably be used. In this case, the heating temperature is preferably 50 to 100°C, and the pressing pressure is preferably 0.1 to 1.0 MPa (1 to 10 kgf/cm²). However, the above conditions shall not specifically be restricted.

A reinforcing material by which the present invention is characterized is stuck on the photoelectric mixed load board produced in the manner described above. A method for sticking the above reinforcing material shall not specifically be restricted, and a method for sticking it via an adhesive is easy. The same ones as used for bonding the optical waveguide film and the flexible electric wiring board can be used as the usable adhesive.

### EXAMPLES

The examples of the present invention shall more specifically be explained below, but the present invention shall by no means be restricted by these examples.

### Evaluation methods:

### 1. Optical loss in bending:

The photoelectric mixed load board produced in the respective examples and comparative examples were connected at longitudinal both ends thereof with a multimode fiber of 50 µm having a smaller core diameter than a diameter of a circle inscribed in the waveguide at a light incoming side and a multimode fiber of 114 µm having a larger core diameter than a diameter of a circle circumscribed in the waveguide at a light outgoing side, wherein the cores thereof were fit, and the respective end surfaces were adhered via a transparent adhesive of a UV ray-curing type ("UV2100", manufactured by Daikin Industries, Ltd.).
Next, a laser ray source ("FLS300", manufactured by EXFO Inc.) having a wavelength of 850 nm was connected with one side of the multimode fiber at a light incoming side, and a receiving sensor ("Q82214", manufactured by Advantest Corporation) was connected with one side of the multimode fiber at a light outgoing side.
A laser ray was allowed to be incident in a state in which the waveguide was kept straight to measure an initial optical loss A dB by means of the receiving sensor. Next, an optical loss B dB was measured in a state in which the waveguide was wound by 180 degrees around a circumference of a bar having a diameter which was twice as large as the bending radius R. The optical loss in bending was obtained by calculating (A in a straight state) - (B in a bent state).

### 2. Bending slide test:

The photoelectric mixed load boards produced in the respective examples and comparative examples were subjected to a bending durability test at a sliding amount of 20 mm and a bending radius set to 1 mm or 2 mm on the condition of a sliding speed of twice/second by means of a bending durability tester (manufactured by Daisho Denshi Co., Ltd.) to observe the presence of breaking every 1000 times, whereby a maximum frequency at which breaking was not brought about was determined.

### 3. Tensile modulus and tensile strength

A sample having a width of 10 mm and a length of 70 mm was obtained from the film which was targeted to be measured, and measurement was carried out according to JIS-K7127 on the following conditions by means of a tensile test equipment ("RTM-100", manufactured by Orientec Co., Ltd.).
Conditions: distance between chucks: 50 mm, temperature: 25°C and tensile speed; 50 mm/minute.
The tensile modulus was calculated from an equation shown below by using an initial straight line part of a tensile stress-distortion curve. Further, in the tensile stress-distortion curve, a maximum strength observed until breaking was brought about was set to the tensile strength.
Tensile modulus (MPa) = (difference (N) in a stress between two points on the straight line) ÷ (original average cross-sectional area (mm²) of optical waveguide film) ÷ (difference in distortion between the same two points).

### Example 1

### (1-1) Preparation of an optical waveguide film:

### Preparation of a resin film for forming a cladding layer:

Weighed into a wide mouth plastic bottle were 48 parts by mass of a phenoxy resin (trade name: Phenotohto YP-70, manufactured by Tohto Kasei Co., Ltd.) as the binder polymer (A), 49.6 parts by mass of alicyclic diepoxycarboxylate (trade name: KRM-2110, molecular weight: 252, manufactured by Asahi Denka Co., Ltd.) as the photopolymerizable compound (B), 2 parts by mass of a triphenylsulfonium hexafluoroantimonate salt (trade name: SP-170, manufactured by Asahi Denka Co., Ltd.) as the photopolymerization initiator (C), 0.4 part by mass of SP-100 (trade name, manufactured by Asahi Denka Co., Ltd.) as a sensitizer and 40 parts by mass of propylene glycol monomethyl ether acetate as an organic solvent, and the mixture was stirred for 6 hours on the conditions of a temperature of 25°C and a revolution of 400 rpm by means of a mechanical stirrer, a shaft and a propeller to prepare a resin vanish A for forming a cladding layer. Then, the resin vanish was filtrated under pressure through a polyflon filter (trade name: PF020, manufactured by Advantec MFS, Inc.) having a pore diameter of 2 µm on the conditions of a temperature of 25°C and a pressure of 0.4 MPa, and it was further defoamed under reduced pressure for 15 minutes on the condition of a vacuum degree of 50 mm Hg by means of a vacuum pump and a bell jar.
The resin vanish A for forming a cladding layer obtained above was coated on a corona-treated surface of a polyamide film (trade name: Mictron, thickness: 12 µm, manufactured by Toray Industries, Inc.) by means of a coating machine (Multicoater TM-MC, manufactured by Hirano Tecseed Co., Ltd.), and it was dried at 80°C for 10 minutes and then at 100°C for 10 minutes. Thereafter, a release PET film (trade name: Purex A31, thickness: 25 µm, manufactured by Teijin DuPont Films Japan Ltd.) as a protective film was stuck thereon so that a release surface was faced to the resin side to obtain a resin film for forming a cladding layer, In this case, a thickness of the resin layer could optionally be controlled by controlling a gap of the coating machine, and in the present example, the gap was controlled so that the film thicknesses after cured were set to 20 µm for the lower cladding layer and 70 µm for the upper cladding layer.

### Preparation of a resin film for forming a core layer:

A resin vanish B for forming a core layer was prepared by the same method on the same conditions as in the production example of the resin film for forming a cladding layer described above, except that used were 26 parts by mass of the phenoxy resin (trade name: Phenotohto YP-70, manufactured by Tohto Kasei Co., Ltd., as the binder polymer (A), 36 parts by mass of 9,9-bis(4-(2-acryloyloxyethoxylphenyl)fluorene (trade name: A-BPEF, manufactured by Shin-Nakamura Chemical Co., Ltd.) and 36 parts by mass of bisphenol A type epoxy acrylate (trade name: EA-1020, manufactured by Shin-Nakamura Chemical Co., Ltd.) as the photopolymerizable compound (B), 1 part by mass of bis(2,4,6-trimethylbenzoyl)phenylphosphine oxide (trade name: Irgacure 819, manufactured by Ciba Specialty Chemicals K.K) and 1 part by mass of 1-[4-(2-hydroxyethoxy)phenyl]-2-hydroxy-2-methyl-1-propane-1-one (trade name: Irgacure 2959, manufactured by Ciba Specialty Chemicals K.K) as the photopolymerization initiator (C) and 40 parts by mass of propylene glycol monomethyl ether acetate as the organic solvent. Then, the resin vanish was filtrated under pressure and further defoamed under reduced pressure by the same method on the same conditions as in the production example described above.
The resin vanish B for forming a core layer obtained above was coated on a non-treated surface of a PET film (trade name: COSMO SHINE A1517, thickness: 16 µm, manufactured by Toyobo Co., Ltd.) and dried by the same method as in the production example described above. Then, the release PET film (trade name: Purex A31, thickness; 25 µm, manufactured by Teijin DuPont Films Japan Ltd.) as a protective film was stuck thereon so that a release surface was faced to the resin side to obtain a resin film for forming a core layer. In the present example, a gap of the coating machine was controlled so that the film thickness after cured was set to 50 µm.

### Preparation of an optical waveguide film:

The release PET film (Purex A31) which was the protective film of the resin film for forming a lower cladding layer obtained above was peeled off, and the resin film was irradiated with a UV ray (wavelength: 365 nm) at 1 J/cm² from a resin side (a side reverse to the base material film) by means of a UV ray exposing machine (EXM-1172, manufactured by Orc Manufacturing Co., Ltd.). Then, it was subjected to heat treatment at 80°C for 10 minutes, whereby a lower cladding layer was formed.

Next, the resin film for forming a core layer described above was laminated on the above lower cladding layer on the conditions of a pressure of 0.4 MPa, a temperature of 50°C and a laminating speed of 0.2 m/minute by means of a roll laminator (HLM-1500, manufactured by Hitachi Plant Techno Co., Ltd.), and then they were vacuumed to 500 Pa or lower by means of a vacuum press laminator (MVLP-500, manufactured by Meiki Co., Ltd.) as a flat plate type laminator. Thereafter, it was heated and compressed on the conditions of a pressure of 0.4 MPa, a temperature of 50 °C and a pressing time of 30 seconds to form a core layer.

Next, the resin film was irradiated with a UV ray (wavelength: 365 nm) at 0.6 J/cm² via a negative type photomask having a width of 50 µm by means of the UV ray exposing machine described above, and then it was heated at 80°C for 5 minutes after exposed. Thereafter, the PET film which was the supporting film was peeled off, and a core pattern was developed in a developer (propylene glycol monomethyl ether acetate/N,N-dimethylacetamide = 8/2, mass ratio). Subsequently, the resin film was washed with a washing liquid (isopropanol) and dried by heating at 100°C for 10 minutes.

Then, the resin film for forming a cladding layer described above was laminated thereon as an upper cladding layer on the same laminating conditions as described above. Further, both faces thereof were irradiated with a UV ray (wavelength: 365 nm) at 25 J/cm² in total, and then the resin film was subjected to heat treatment at 160°C for one hour, whereby an upper cladding layer was formed to prepare a flexible optical waveguide in which the base material film was arranged at an outside thereof. Further, the above flexible optical waveguide was treated for 24 hours on a high temperature and high humidity condition of 85°C/85 % for peeling off the polyamide film to prepare an optical waveguide from which the base material film was removed.

The refractive indices of the core layer and the cladding layer were measured by means of a prism coupler (Model 2010) manufactured by Metricon Inc. to find that a refractive index of the core layer was 1.584 at a wavelength of 830 nm and that a refractive index of the cladding layer was 1.550. Further, a propagation loss of the optical waveguide prepared was measured by a cutback method (measured waveguide lengths: 10, 5, 3 and 2 cm, incident fiber: GI-50/125 multimode fiber (NA = 0.20), output fiber: SI-114/125 (NA = 0.22)) using a plane emission laser of 850 nm (FLS-300-01-VCL, manufactured by EXFO Inc.) for a light source and Q82214 manufactured by Advantest Corporation for a receiving sensor to find that it was 0.05 dB/cm.
Further, a tensile modulus and a tensile strength of the optical waveguide film obtained were measured by the methods described above to result in finding that the tensile modulus was 2,000 MPa and that the tensile strength was 70 MPa.

### (1-2) Preparation of a sheet-like adhesive:

Added and mixed by stirring were 100 parts by mass of HTR-860P-3 (trade name, glycidyl group-containing acryl rubber, molecular weight: 1,000,000, Tg: -7°C, manufactured by Teikoku Chemical Industry Co., Ltd.), 5.4 parts by mass of YDCN-703 (trade name, o-cresol novolak type epoxy resin, epoxy equivalent: 210, manufactured by Tohto Kasei Co., Ltd.), 16.2 parts by mass of YDCN-8170C (trade name, bisphenol F type epoxy resin, epoxy equivalent 157, manufactured by Tohto Kasei Co., Ltd.), 15.3 parts by mass of Plyophen LF2882 (trade name, bisphenol A novolak resin, manufactured by Dainippon Ink & Chemicals Inc.), 0.1 part by mass of NUCA-189 (trade name, γ-mercapropropyltrimethoxysilane, manufactured by Nippon Unicar Co., Ltd.), 0.3 part by mass of NUCA-1160 (trade name, γ-ureidopropyltriethoxysilane, manufactured by Nippon Unicar Co., Ltd.), 30 parts by mass of A-DPH (trade name, dipentaerythritol hexaacrylate, manufactured by Shin-Nakamura Chemical Co., Ltd.), 1.5 part by mass of Irgacure 369 (trade name, 2-benzyl-2-dimethylamino-1-(4-morpholinophenyl)-butanone-1-one: I-369, manufactured by Ciba Specialty Chemicals K.K.) and cyclohexanone, and the mixture was deaerated under vacuum. The above adhesive vanish was coated on surface release-treated polyethylene terephthalate (Teijin Tetron film: A-31, manufactured by Teijin Limited) having a thickness of 75 µm, and the film was dried by heating at 80°C for 30 minutes to obtain a tacky adhesive sheet. A light transmitting supporting base material (FHF-100, low density polyethylene terephthalate/vinyl acetate/low density polyethylene terephthalate three layer film, manufactured by Thermo Co., Ltd.) having a thickness of 80 µm was laminated on the above tacky adhesive sheet to thereby prepare a sheet-like adhesive comprising the protective film (surface release-treated polyethylene terephthalate), the tacky adhesive layer and the light transmitting supporting base material. A thickness of the tacky adhesive layer was 10 µm.

The tacky adhesive layer of the sheet-like adhesive prepared in the above manner was cured at 160°C for 1 hour, and a transmission factor thereof was measured by means of a U-3310 UV visible spectrophotometer manufactured by Hitachi High-Technologies Corporation to find that it had a high transmission factor of 98 % or more in a wavelength of 850 nm and that it had a transmission loss corresponding to 0.1 dB or less.
The refractive index was measured by means of the prism coupler (Model 2010) manufactured by Metricon Inc. to find that it was 1.505 in a wavelength of 830 nm.
Further, a tensile modulus of the sheet-like adhesive obtained was measured by the method described above to result in finding that the tensile modulus was 350 MPa.

### (1-3) Preparation of photoelectric mixed load board:

The sheet-like adhesive from which the protective film was peeled off was laminated on the flexible optical waveguide on the conditions of a pressure of 0.4 MPa, a temperature of 50°C and a laminating speed of 0.2 m/minute by means of the roll laminator (HLM-1500, manufactured by Hitachi Chemical Techno Plant Co., Ltd.). Subsequently, the waveguide was processed in a rectangular form (a length: 120 mm and a width: 2 mm) by means of a dicing saw (DAD-341, manufactured by DISCO Corporation) - A supporting base material side thereof was irradiated with a UV ray (365 nm) at 250 mJ/cm² to reduce an adhesive strength of an interface between the tacky adhesive layer and the supporting base material, and the supporting base material was peeled off to obtain an optical waveguide provided with an adhesive laser.
Next, the optical waveguide provided with an adhesive was positioned to a prescribed place of a flexible electric wiring board (length: 120 mm, width: 2 mm, base material: Kapton 100EN (a tensile strength measured by the method described above was 370 MPa), board thickness: 25 µm, cupper circuit thickness: 12 µm) having an electric wiring by making use of a mask aligner mechanism equipped in a UV ray exposing equipment (MAP-1200-L, manufactured by Dainippon Screen Mfg. Co., and it was temporarily adhered thereon by pressing on the conditions of a pressure of 0.4 MPa, a temperature of 80 °C and a laminating speed of 0.2 m/minute by means of the above roll laminator and then heated at 160°C for 1 hour in a clean oven to adhere the flexible optical waveguide on the electric wiring board, whereby a photoelectric mixed load board was obtained.
In this regard, a light transmission factor of Kapton EN which was the base material of the flexible electric wiring board was measured by means of the U-3310 spectrophotometer manufactured by Hitachi High-Technologies Corporation to find that it was 86 % in a wavelength of 850 nm. This was a transmission loss corresponding to 0.7 dB, and combination thereof with that of the tacky adhesive layer described above amounted to a low optical loss of less than 1 dB in transmitting through the electric wiring board, so that a structure in which through-holes for light transmission were not provided was assumed in the present example.

### (1-4) Preparation of portable phone;

Fig. 1 is a perspective drawing showing a constitution of a portable phone of a sliding type. The portable phone comprises a first case 10 having a first light receiving and emitting part and a second case 20 having a second light receiving and emitting part, and the first light receiving and emitting part is connected with the second light receiving and emitting part (not illustrated) by an optical communication means. The first case 10 is constituted from a key board operation part, a controlling part, a power source part, a light receiving and emitting device and the like. The second case 20 is constituted from a liquid crystal display part, a voice part, a camera part, a controlling part, a power source part, a light receiving and emitting device and the like.
The photoelectric mixed load board prepared above was twisted and arranged in a space part between the first case and the second case in the portable phone described above so that a width direction of the optical waveguide was a vertical direction. The bending radius R was set to 2 mm,
It was evaluated by the method described above to result in finding that an optical loss in the bent part was 0.4 dB. A total thickness of the waveguide was 0.27 mm. Further, it was confirmed that the waveguide endured a sliding frequency of one million times.

### Comparative Example 1

An optical waveguide was arranged in the same manner as in Example 1, except that in Example 1, the optical waveguide was arranged in the same manner as a conventional manner without twisting. R was set as well to 2 mm in the present invention, and the optical waveguide was evaluated by the same method as in Example 1 to result in finding that an optical loss in the bent part was 0.4 dB and that a total thickness of the waveguide was 4.2 mm. It was confirmed that the waveguide endured a sliding frequency of one million times.

### Comparative Example 2

An optical waveguide was arranged in the same manner as in Example 1, except that in Example 1, the optical waveguide was arranged in the same manner as a conventional manner without twisting. R was set as well to 2 mm in the present invention, and the optical waveguide was evaluated by the same method as in Example 1 to result in finding that an optical loss in the bent part was 1.2 dB and that a total thickness of the waveguide was 2.2 mm. The bending radius R was 1 mm, and therefore the optical waveguide was broken at a sliding frequency of 5,000 times.

### INDUSTRIAL APPLICABILITY

The electronic device of the present invention makes it possible to exchange signals between cases at a small thickness of 1 mm or less and makes it possible to reduce a size of a portable phone itself. Breaking and cracks are not brought about on the optical waveguide even after repeating sliding over a long period of time, and a good communication function can be maintained. Accordingly, the electronic device of the present invention can suitably be used for portable phones, PDA, small-sized personal computers and the like.

## Claims

1. An electronic device constituted from a first case having a first light receiving and emitting part and a second case having a second light receiving and emitting part and having a mechanism in which the first case slides relatively to the second case, wherein an optical waveguide as an optical communication means for connecting the first light receiving and emitting part with the second light receiving and emitting part by optical signals is provided, and the above optical waveguide is arranged in a space part between the first case and the second case so that a width direction of the optical waveguide is a vertical direction.

2. The electronic device according to claim 1, wherein the first case and the second case have a first electric circuit part and a second electric circuit part respectively, and an electric connecting means in which the above first electric circuit part is connected with the above second electric circuit part by electric signals is provided.

3. The electronic device according to claim 2, wherein the connecting means is a flexible printed board, and the above flexible printed board is integrated with the optical waveguide.

4. The electronic device according to any of claims 1 to 3, wherein the electronic device is a portable phone.
